# DEMANDE DE BREVET EUROPEEN

(11) **EP 0 599 725 A1**
(43) Date de publication de la demande: **01.06.1994**
(21) Numéro de dépôt: 93402836.6
(22) Date de dépôt: 22.11.1993
(51) Int. Cl.: G03C 7/12, G02B 5/22

(54) **Filtre coloré à compensation d'éclairement, procédé de fabrication d'un tel filtre et écran plat d'affichage en comportant application**

(30) Priorité: 24.11.1992 FR 9214118
(71) Demandeur: SAGEM SA, F-75783 Paris Cédex 16 (FR)
(72) Inventeur: Deffontaines, Christophe, 75012 Paris (FR); Parker, Ambroise, F-92500 Rueil-Malmaison (FR); Lecat, Daniel, F-95100 Argenteuil (FR)
(74) Mandataire: Fort, Jacques

(57) **Abrégé**

Le filtre transmissif, utilisable dans un écran plat de visualisation, comprend un substrat transparent (14) portant sur une face une mosaïque de pixels colorés constituée par des émulsions photographiques au moins trichromes. La densité des émulsions est variable suivant l'emplacement à la surface du substrat, de façon à compenser les variations spatiales d'éclairement d'une source d'illumination (28-32).

## Description

La présente invention concerne les filtres colorés transmissifs destinés à être interposés sur le flux lumineux produit par une source de façon à compenser les défauts d'homogénéité du flux lumineux à l'entrée du filtre et à fournir en sortie une répartition donnée sur toute la surface. Le terme "coloré" signifie que le filtre présente une mosaïque de zones ou "pixels" ayant chacun l'une d'au moins trois couleurs fondamentales, disposées suivant un réseau régulier, par exemple avec un pas de répartition suffisamment faible pour que, à la distance normale d'observation, l'oeil ne puisse dissocier les couleurs fondamentales et ne soit sensible qu'à leur combinaison, par exemple.

L'invention concerne plus particulièrement les filtres colorés du genre ci-dessus permettant de donner au flux lumineux qui en sort une répartition transversale qui soit est constante, soit présente des variations contrôlées.

L'invention trouve une application particulièrement importante dans le domaine des écrans de visualisation dits "plats" qui comportent, en plus d'un filtre du genre ci-dessus, une cellule active ayant des électrodes de commande définissant une matrice de pixels dont la disposition correspond à celle de la mosaïque, les électrodes de commande étant reliées à une unité permettant de modifier la transparence de la cellule, indépendamment au niveau de chaque pixel.

Parmi les écrans de visualisation de ce genre, on peut notamment citer les écrans à cristaux liquides, dont la cellule active est constituée par une couche de cristaux liquides de quelques microns d'épaisseur emprisonnée entre deux plaques transparentes, ces plaques portant des réseaux d'électrodes définissant un condensateur élémentaire pour chaque pixel, destiné à être reliée à une unité de commande permettant de mettre sous tension temporairement chaque condensateur élémentaire.

A l'heure actuelle, la plupart des écrans à cristaux liquides comporte une cellule active du genre décrit ci-dessus, une source d'éclairage et un filtre coloré de nature composite, ayant d'une part un substrat revêtu d'une couche imprégnée de colorant réparti de façon à constituer les pixels et d'autre part une feuille d'homogénéisation du flux, revêtue par sérigraphie de zones plus ou moins absorbantes.

On a proposé (EP-A-0 341 348) de constituer des filtres colorés ayant une répartition régulière de pixels par des procédés photographiques, plutôt que par des techniques de dépôt et de gravure de produits organiques colorés, mais toujours pour constituer des filtres ayant les mêmes caractéristiques de transmissibilité moyenne sur toute leur surface. La mise en oeuvre de ces procédés photographiques laisse donc subsister la nécessité d'une feuille complémentaire de transparence variable.

On connaît déjà (document DE-A-2 926 189) un filtre transmissif conforme au préambule de la revendication 1. Il n'est nulle part question dans ce document de donner aux émulsions photographiques une densité variable de façon à compenser les variations spatiales d'éclairement d'une source d'illumination, que ce soit dans la définition de l'art antérieur ou que ce soit dans la partie décrivant l'apport inventif.

L'invention vise notamment à réaliser un filtre permettant de réaliser la compensation des défauts d'homogénéité d'un flux lumineux d'éclairage par des moyens qui sont plus simples que par le passé.

Elle utilise dans ce but la constatation qu'un filtre coloré réalisé par voie photographique peut comporter une densité de couleur modulable par action sur le flux lumineux appliqué lors de l'insolation et aussi sur la constatation que, pour la quasi-totalité des sources susceptibles d'être utilisées, la répartition d'atténuation du flux lumineux sur la surface est la même pour toutes les couleurs élémentaires.

L'invention propose en conséquence un filtre suivant la partie caractérisante de la revendication 1.

L'invention propose également un procédé de fabrication d'un filtre transmissif destiné à être illuminé par une source lumineuse, caractérisé en ce que :
- on fait un cliché monochrome de la source d'illumination, et
- on insole un substrat transparent portant les émulsions photosensibles destinées à constituer la mosaïque à travers un maître en couleurs, complémentaires dans le cas d'un procédé négatif, reproduisant la matrice,
- l'insolation s'effectuant soit en interposant sur le trajet d'un flux lumineux homogène le dit cliché en plus du maître, soit en utilisant un masque maître obtenu par une technique photographique à travers un masque de définition des pixels et le dit cliché.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1 est un schéma de principe en coupe, montrant une constitution possible d'écran de visualisation à cristaux liquides, l'échelle n'étant pas respectée pour plus de clarté ;
- les figures 2A et 2B montrent deux phases successives de fabrication d'un filtre coloré utilisable dans l'écran de visualisation de la figure 1.

La description qui suit ne fera référence qu'à des écrans de visualisation ayant une cellule active à cristaux liquides. Cependant, l'invention serait également utilisable avec des cellules actives susceptibles de travailler en transmission, constituées de pixels pouvant être rendus opaques ou transparents (éventuellement avec réalisation de valeurs de gris, soit par commande d'absorption, soit par modulation de rapport cyclique dans le temps).

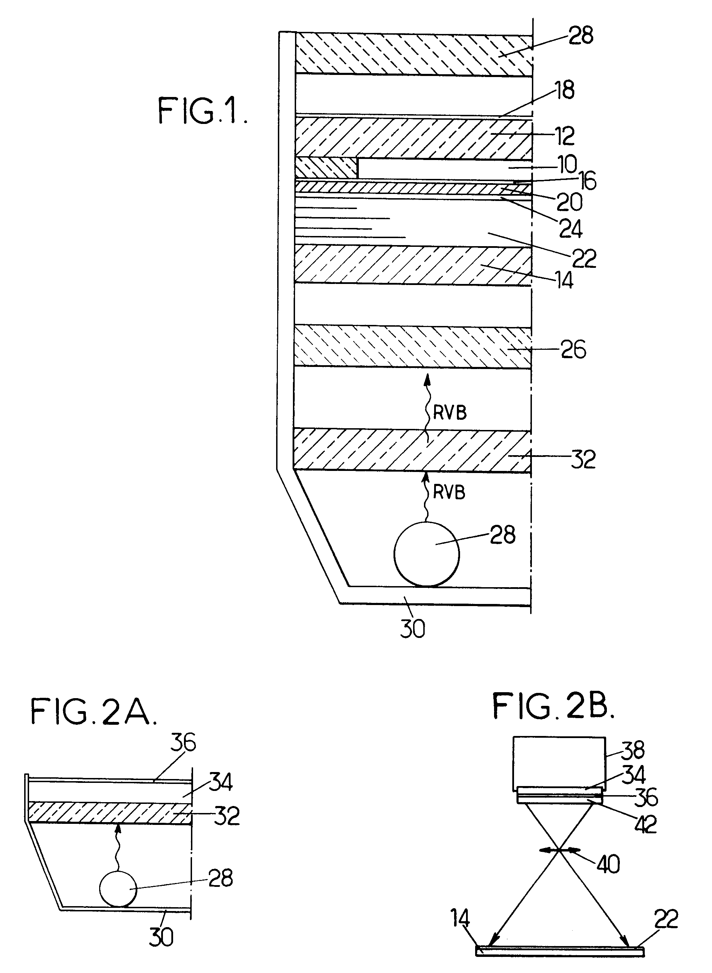

L'écran de visualisation montré en figure 1 comporte une couche mince 10 de cristaux liquides (ayant généralement quelques microns d'épaisseur) placée entre deux lames transparentes 12 et 14, généralement en verre. Les cristaux liquides sont généralement de type nématique et, lorsqu'ils ne sont pas excités par un champ électrique, ils sont orientés par un dépôt d'accrochage 16, généralement en polyimide brossé dans la direction souhaitée d'alignement des molécules. Les lames transparentes 12 et 14, en matériau diélectrique, portent des électrodes permettant de constituer des condensateurs élémentaires correspondant chacun à un pixel. L'une des lames peut en particulier porter une matrice active d'électrodes de commande munies chacune d'un transistor en couche mince constituant une matrice active 18. L'autre lame transparente 14 porte une contre-électrode 20 également transparente, constituée par exemple par un dépôt mince d'oxyde d'étain et d'indium, fréquemment désigné par l'abréviation ITO.

La matrice active 18 et la contre-électrode 20 peuvent avoir l'une quelconque des dispositions connues. En particulier, la contre-électrode 20 peut être constituée par un plan de masse continu. Dans ce cas, la commande s'effectue ligne par ligne de la matrice, de façon classique en appliquant, lorsque chaque ligne est excitée, les tensions appropriées sur des conducteurs de colonne. Il est également possible d'adopter la constitution de contre-électrode inter-digitée décrite dans la demande de brevet FR n° 92 08159, adaptée à un affichage trichrome.

La cellule active est complétée, pour permettre un affichage trichrome, par un filtre coloré 22 directement déposé sur l'une des lames transparentes. Dans le cas montré sur la figure 1, ce filtre trichrome est constitué par une mosaïque de pixels colorés, ayant une répartition identique à celle de la matrice active, qui sera en règle générale complétée par un maillage opaque, destiné à séparer les pixels les uns des autres et à améliorer le contraste. Pour éviter un contact direct entre le filtre constitué par des émulsions et la contre-électrode en ITO, un dépôt mince de passivation 24, par exemple en polyacrylate, sera généralement déposé sur les émulsions. Ces dernières seront en général prévues pour fournir des images en couleur par synthèse additive et peuvent être constituées par le procédé décrit dans le document EP-A-0 341 348 auquel on pourra se reporter.

L'ensemble ainsi constitué est placé entre deux polariseurs 26 et 28. Enfin, pour constituer un afficheur, il est nécessaire de prévoir une source lumineuse. Dans le cas illustré sur la figure 1, cette source comprend un ou plusieurs générateurs fournissant un spectre lumineux ayant une énergie suffisante aux longueurs d'onde des couleurs fondamentales choisies, qui sont celles des pixels du filtre. Ces générateurs peuvent être des tubes fluorescents dont la couche de conversion comporte des phosphores ayant un pic d'énergie d'émission pour chaque couleur du filtre, un réflecteur 30 et un écran diffuseur 32.

Dans la pratique, il n'est pas possible d'obtenir ainsi une homogénéité complète du flux qui sort du diffuseur.

On a en conséquence déjà proposé des afficheurs dans lesquels, pour améliorer l'uniformité d'affichage, un écran ayant un coefficient de transmission variable suivant l'emplacement est interposé entre le diffuseur et le filtre coloré. L'écran est constitué généralement par sérigraphie.

La réalisation de cet écran représente une opération supplémentaire et sa présence complique la constitution de l'afficheur dans son ensemble.

Comme cela a déjà été indiqué plus haut, le filtre 22 suivant l'invention permet d'assurer non seulement la synthèse des couleurs à partir de trois couleurs primaires ou de base (rouge, vert et bleu en général), mais aussi la compensation d'homogénéité.

On ne décrira maintenant, dans le procédé de fabrication d'un filtre coloré, que les étapes qui se différencient de celles déjà connues.

Plusieurs modes d'exécution sont possibles. Mais dans tous les cas, une première étape est constituée par la réalisation d'un cliché de la source lumineuse de rétro-éclairage, en noir et blanc. Un tel cliché, une fois réalisé avec une source type, pourra être utilisé pour la fabrication de tous les filtres destinés à être employés avec des sources du même genre.

Le cliché peut être réalisé de diverses façons, à condition d'être à la même échelle que le maître qu 'on utilisera pour la réalisation du filtre par un procédé photographique. La figure 2A montre une solution simple, consistant à placer un support transparent épais 34, généralement en verre, portant l'émulsion en noir et blanc 36, directement sur le diffuseur 32. En pratique, le cliché sera plus fréquemment réalisé à l'aide d'un appareil photographique ou d'une caméra CCD. On peut ainsi obtenir un cliché en négatif dont le coefficient de transmission est modulé sur sa surface de manière corrélée avec la répartition de flux de la source de rétro-éclairage. L'absence de proportionnalité directe entre éclairement et opacité est sans conséquence car elle est partiellement compensée lors de l'insolation ultérieure de réalisation du filtre et au surplus, il peut être tenu compte de la non proportionnalité, qui se traduit par des erreurs du second ordre, par ajout d'une lame correctrice, réalisée point par point une fois pour toutes.

Le cliché peut ensuite être utilisé de plusieurs façons. Une première solution, montrée en figure 2B, consiste à insoler la plaque 14 portant les émulsions 22 contenant les précurseurs des pigments à l'aide d'une boîte à lumière 38 fournissant un flux homogène et d'une optique 40 de focalisation, en interposant sur le flux d'une part le cliché précédemment obtenu, d'autre part un maître 42 à la même échelle, sur lequel tous les pixels de même couleur sont tracés de la même façon. En général, plusieurs expositions seront utilisées, avec des maîtres différents, notamment lorsque l'on souhaite séparer les pixels.

Les maîtres ou le maître utilisera généralement les trois couleurs complémentaires du rouge, du vert et du bleu, c'est-à-dire jaune magenta et cyan.

Les émulsions seront généralement choisies de façon à pouvoir supporter les températures élevées nécessaires au dépôt en ITO et au dégazage qui est effectué pour avoir une tenue satisfaisante. Lorsqu'on utilise la constitution montrée en figure 1, on dépose d'abord, sur les émulsions, après développement, une couche d'acrylate, puis une couche d'ITO par dépôt sous vide secondaire et enfin la couche de polymide qui doit être chauffée pendant plusieurs dizaines de minutes à une température élevée.

Une variante de réalisation, qui est souvent avantageuse lorsque le même maître unique est utilisé pour fabriquer en série des filtres tous identiques et destinés à des sources d'éclairage ayant les mêmes caractéristiques, consiste à réaliser le maître lui-même par un procédé photographique en modulant sa transmissibilité. Dans ce cas, on peut utiliser une insolation du maître à travers un masque de type courant en micro-électronique et le cliché de la source de rétro-éclairage. Dans ce cas, l'impressionnement des émulsions destinées à constituer le filtre s'effectue en une seule fois et avec uniquement interposition du maître sur le flux lumineux fourni par la boîte à lumière.

L'invention ne se limite pas aux modes particuliers de réalisation qui viennent d'être décrits. Elle s'applique à des constitutions très diverses d'écrans de visualisation. Elle n'apporte aucune contrainte quant à la direction de traversée de l'écran par le flux lumineux. Elle n'apporte également aucune contrainte sur la nature de la cellule active. Elle n'apporte non plus aucune contrainte quant à la disposition relative des différentes couches et la nature des couches photosensibles (à tirage à partir d'un négatif ou inversibles).

Dans tous les cas, la réalisation du filtre est simplifiée, par suppression d'au moins une étape et d'un composant.

## Revendications

1. Filtre transmissif comprenant un substrat transparent (14) portant sur une face une mosaïque de pixels colorés constituée par des émulsions photographiques au moins trichromes,
caractérisé en ce que la densité des émulsions est variable suivant l'emplacement à la surface du substrat, de façon à compenser les variations spatiales d'éclairement d'une source d'illumination (28-32).

2. Filtre selon la revendication 1, caractérisé en ce que les pixels du substrat sont séparés les uns des autres par un maillage opaque.

3. Procédé de fabrication d'un filtre transmissif suivant la revendication 1 ou 2, destiné à être illuminé par une source lumineuse, caractérisé en ce que :
- on prépare un cliché en noir et blanc de la source d'illumination (28-32), et
- on insole un substrat transparent (14) portant des émulsions photosensibles (22) au moins trichromes à travers un maître reproduisant la matrice de pixels colorés à réaliser, l'insolation étant effectuée soit en interposant sur le trajet d'un flux lumineux homogène le dit cliché en plus du masque maître, soit en utilisant un masque maître obtenu par une technique photographique à travers un masque de définition des pixels et le dit cliché.

4. Procédé selon la revendication 3, caractérisé en ce que le maître est en couleurs complémentaires.

5. Ecran plat de visualisation comprenant une cellule active ayant des électrodes de commande définissant une matrice de pixels dont la disposition correspond à celle de la mosaïque, les électrodes de commande étant reliées à une unité permettant de modifier la transparence de la cellule indépendamment au niveau de chaque pixel, et un filtre selon la revendication 1 ou 2.

6. Ecran plat selon la revendication 5, caractérisé en ce que la cellule active comporte une couche de cristaux liquides (10) placée entre une lame transparente (12) portant des électrodes de commandes et le dit filtre, les émulsions étant tournées vers la couche de cristaux liquides et séparées de cette couche par un dépôt de passivation (24), un dépôt conducteur transparent (20) constituant contre-électrode, et une couche d'orientation des cristaux liquides.
